# EUROPEAN PATENT APPLICATION

(11) **EP 4 580 097 A1**
(43) Date of publication of application: **02.07.2025**
(21) Application number: 24223230.4
(22) Date of filing: 24.12.2024
(51) Int. Cl.: H04L 1/1867

(54) **REACHABILITY DETECTION FOR DIGITAL ENHANCED CORDLESS TELECOMMUNICATIONS (DECT) ULTRA LOW ENERGY (ULE) DEVICES**

(30) Priority: 27.12.2023 US 202318397787
(71) Applicant: Synaptics Incorporated, San Jose, CA 95131 (US)
(72) Inventor: R V, Vishwa Bharathi, San Jose, 95131 (US); KORI, Basavaraj Halappa, San Jose, 95131 (US)
(74) Representative: J A Kemp LLP

(57) **Abstract**

This disclosure provides methods, devices, and systems for wireless communications. The present implementations more specifically relate to techniques for detecting a reachability of portable devices in a digital enhanced cordless telecommunications (DECT) ultra low energy (ULE) home automation networks (HAN). In some aspects, a base station may determine that a portable device is unreachable after failing to receive an ACK from the device after a threshold number of retransmissions or a threshold amount of time has elapsed. Upon determining that a portable device is unreachable, the base station may remove any messages intended for the device from its transmission queue and may refrain from processing any further transmissions to the device. A base station may determine that a portable device is reachable again after receiving a communication from the device. In some implementations, a base station may notify a host application or processor about the reachability of the portable devices.

## Description

### TECHNICAL FIELD

The present implementations relate generally to wireless communication, and specifically to reachability detection for digital enhanced cordless telecommunications (DECT) ultra low energy (ULE) devices.

### BACKGROUND OF RELATED ART

Digital enhanced cordless telecommunications (DECT) ultra low energy (ULE) is a wireless communication standard that can be used to implement home automation, security, and climate control in residential and enterprise environments. The basic building block of a ULE system is a home automation network (HAN) that includes a fixed part (FP) and at least one portable part (PP). A DECT ULE PP (also referred to as a "leaf") can be any portable device that is used in home automation, security, or climate control applications. Example suitable portable devices include sensors (such as smoke detectors or motion detectors), thermostats, and electricity control elements, among other examples. The DECT ULE FP (also referred to as the "root node") is a base station or access point that bridges a connection between the portable devices and a local network (or the Internet). The base station communicates with the portable devices over a DECT air interface. Each over-the-air (OTA) connection between the base station and a respective portable device is referred to as a wireless communication "link."

A base station may set up a communication link with a portable device by paging the device (such as by transmitting a DECT ULE "page" message) and listening for a response (also referred to as a DECT ULE "acknowledgement" message) from the portable device. After establishing a communication link between a base station and a portable device, the base station may transmit messages to the portable device over the DECT air interface. A portable device that receives a message from a base station may transmit an acknowledgement (ACK) back to the base station confirming receipt of the message. If the base station does not receive an ACK within a threshold duration after transmitting message, the base station may retransmit the message to the portable device. Existing versions of the DECT standard do not limit the number of retransmission attempts by the base station.

In some instances, a portable device may fail to receive messages from a base station because it is offline or beyond wireless communication range. As a result, many existing base stations repeatedly retransmit the same message until they receive an ACK from the intended recipient (such as when a portable device comes back online or within wireless communication range). Such repeated retransmissions may consume significant base station resources (including memory, power, and processing resources) that could otherwise be used to serve other portable devices. Thus, there is a need to limit the number of retransmissions to portable devices that may be offline or beyond wireless communication range of a base station.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in a method of wireless communication performed by a wireless communication device. The method includes transmitting a first message over a wireless channel to a target device; listening for a response from the target device following the transmission of the first message; determining that the target device is unreachable based at least in part on listening for at least a threshold period without receiving the response from the target device; and refraining from retransmitting the first message to the target device responsive to determining that the target device is unreachable.

Another innovative aspect of the subject matter of this disclosure can be implemented in a wireless communication device, including a processing system and a memory. The memory stores instructions that, when executed by the processing system, cause the wireless communication device to transmit a first message over a wireless channel to a target device; listen for a response from the target device following the transmission of the first message; determine that the target device is unreachable based at least in part on listening for at least a threshold period without receiving the response from the target device; and refrain from retransmitting the first message to the target device responsive to determining that the target device is unreachable.

### BRIEF DESCRIPTION OF THE DRAWINGS

The present implementations are illustrated by way of example and are not intended to be limited by the figures of the accompanying drawings.
FIG. 1 shows an example wireless communication network.
FIG. 2 shows a timing diagram depicting example wireless communications between a base station and a portable device associated with a wireless communication network, according to some implementations.
FIG. 3 shows a sequence diagram depicting example communications between a host processor, a base station, and a portable device associated with a wireless communication network, according to some implementations.
FIG. 4 shows a block diagram of an example wireless communication device, according to some implementations.
FIG. 5 shows an illustrative flowchart depicting an example operation for wireless communications, according to some implementations.

### DETAILED DESCRIPTION

In the following description, numerous specific details are set forth such as examples of specific components, circuits, and processes to provide a thorough understanding of the present disclosure. The term "coupled" as used herein means connected directly to or connected through one or more intervening components or circuits. The terms "electronic system" and "electronic device" may be used interchangeably to refer to any system capable of electronically processing information. Also, in the following description and for purposes of explanation, specific nomenclature is set forth to provide a thorough understanding of the aspects of the disclosure. However, it will be apparent to one skilled in the art that these specific details may not be required to practice the example embodiments. In other instances, well-known circuits and devices are shown in block diagram form to avoid obscuring the present disclosure. Some portions of the detailed descriptions which follow are presented in terms of procedures, logic blocks, processing and other symbolic representations of operations on data bits within a computer memory.

These descriptions and representations are the means used by those skilled in the data processing arts to most effectively convey the substance of their work to others skilled in the art. In the present disclosure, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system. It should be borne in mind, however, that all of these and similar terms are to be associated with the appropriate physical quantities and are merely convenient labels applied to these quantities.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the example input devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium including instructions that, when executed, performs one or more of the methods described above. The non-transitory processor-readable data storage medium may form part of a computer program product, which may include packaging materials.

The non-transitory processor-readable storage medium may comprise random access memory (RAM) such as synchronous dynamic random-access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

The various illustrative logical blocks, modules, circuits and instructions described in connection with the embodiments disclosed herein may be executed by one or more processors (or a processing system). The term "processor," as used herein may refer to any general-purpose processor, special-purpose processor, conventional processor, controller, microcontroller, and/or state machine capable of executing scripts or instructions of one or more software programs stored in memory.

As described above, existing versions of the digital enhanced cordless telecommunications (DECT) ultra low energy (ULE) standard do not limit the number of retransmissions by a base station that fails to receive an acknowledgement (ACK) when attempting to communicate with a portable device. In some instances, a portable device may fail to receive a message from a base station (and thus fail to respond with an ACK) because it is offline or beyond wireless communication range. In such instances, the base station may repeatedly retransmit the same message expecting to eventually receive an ACK (such as when a portable device comes back online or within wireless communication range). Such repeated retransmissions may consume significant base station resources (including memory, power, and processing resources) that could otherwise be used to serve other portable devices. Aspects of the present disclosure recognize that a base station may allocate its resources more efficiently based on a reachability of any portable devices it is attempting to communicate with.

Various aspects relate generally to DECT ULE networks, and more particularly, to techniques for detecting a reachability of portable devices. As used herein, the term "reachability" refers to the ability of a base station to communicate with a portable device. For example, a portable device may be "unreachable" when it is offline, beyond wireless communication range, or otherwise unable to communicate with a base station. By contrast, a portable device may be "reachable" when it is online, within wireless communication range, and able to communicate with a base station. In some aspects, a base station may determine that a portable device is unreachable after failing to receive an ACK from the device after a threshold number of retransmissions or a threshold amount of time has elapsed. Upon determining that a portable device is unreachable, the base station may remove any messages intended for the device from its transmission queue and may refrain from processing any further transmissions to the portable device. A base station may determine that a portable device is reachable again after receiving a communication from the device. In some implementations, a base station may notify a host application or processor about the reachability of portable devices in a DECT ULE network.

Particular implementations of the subject matter described in this disclosure can be implemented to realize one or more of the following potential advantages. Base stations of the present implementations can more optimally allocate their resources for processing transmissions to portable devices in a DECT ULE network based on a reachability of each portable device. For example, by refraining from processing transmissions to portable devices determined to be unreachable, aspects of the present disclose may conserve a base station's power, memory, or processing resources that would otherwise be wasted attempting to communicate with portable devices that are offline or beyond wireless communication range. The base station may further reallocate such power, memory, or processing resources to serve other portable devices in a DECT ULE network (such as any portable devices determined to be reachable). By notifying a host application or processor about the reachability of portable devices in a DECT ULE network, aspects of the present disclosure may enable new functionality by the host application or processor that is currently not supported by existing DECT ULE networks.

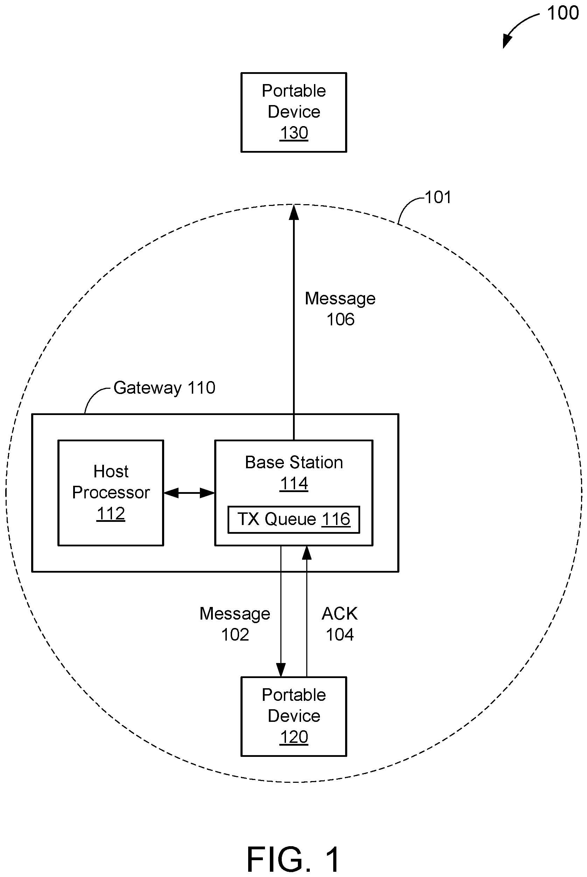

FIG. 1 shows an example wireless communication network 100. In some aspects, the wireless communication network 100 may be one example of a home automation network (HAN) conforming to the digital enhanced cordless telecommunications (DECT) ultra low energy (ULE) wireless communication standard. The network 100 includes a gateway 110 and a number of portable devices 120 and 130. Although two portable devices 120 and 130 are shown in the example of FIG. 1, the network 100 may include fewer or more portable devices in some other implementations.

The gateway 110 includes a host processor 112 and a base station 114. The base station 114 (also referred to as a "root node") represents a DECT ULE fixed part (FP) of the network 100. More specifically, the base station 114 enables the host processor 112 to communicate with portable devices in the network 100 (such as any of the portable devices 120 or 130) over a DECT air interface. For example, the base station 114 may receive uplink messages, via the DECT air interface, from one or more portable devices and provide the received messages to the host processor 112. The base station 114 also may transmit downlink messages, via the DECT air interface, to one or more portable devices on behalf of the host processor 112.

The base station 114 includes a transmission (TX) queue 116 for storing or buffering messages to be transmitted over the DECT air interface. For example, upon receiving a downlink message from the host processor 112, the base station 114 may store the downlink message in the TX queue 116 until it can transmit the downlink message to the intended recipient (such as one of the portable devices 120 or 130). Messages may remain in the TX queue 116 if they fail to reach their intended recipient. This allows the base station 114 to retransmit the same message (from the TX queue 116) over the DECT air interface in the event that a portable device fails to receive a prior transmission (or retransmission) of the message.

Each of the portable devices 120 and 130 (also referred to as a "leaf") represents a DECT ULE portable part (PP) of the network 100. As described above, a DECT ULE PP can be any portable device that is used in home automation, security, or climate control applications. Example suitable portable devices may include sensors (such as smoke detectors or motion detectors), thermostats, and electricity control elements, among other examples. Each of the portable devices 120 and 130 is registered with the base station 114, so that messages can be routed between the base station 114 and the portable devices 120 and 130. In other words, the base station 114 stores registration information that enables each of the portable devices 120 and 130 to communicate with the base station 114 (and thus, the host processor 112) via the DECT air interface.

The base station 114 may transmit and receive messages (also referred to as "information packets"), via the DECT air interface, carrying information associated with one or more applications executing on the host processor 112 (also referred to as "host applications"). For some applications, each portable device that receives a message from the base station 114 may be required to respond with an acknowledgement (ACK) message indicating that the message from the base station 114 has been successfully received. For example, as shown in FIG. 1, the base station 114 may transmit a message 102 to the portable device 120 over the DECT air interface. In response to receiving the message 102, the portable device 120 may transmit an ACK 104 back to the base station 114 over the DECT air interface. The base station 114 may remove the message 102 from the TX queue 116 after receiving the ACK 104 from the portable device 120.

The energy in a radio frequency (RF) signal degrades as the signal propagates through air. As a result, the base station 114 (and each of the portable devices 120 and 130) has a limited wireless communication range. In the example of FIG. 1, the base station 114 is shown to have an effective communication range 101 (depicted as a ring centered around the base station 114), which represents a maximum signal propagation distance or a distance at which the signal-to-noise ratio (SNR) of wireless signals transmitted by the base station 114 drops below a threshold level. For example, the threshold level may represent a minimum SNR at which a receiving device can still receive or decode wireless signals transmitted by the base station 114.

In the example of FIG. 1, the portable device 130 is located beyond the effective range 101 of the base station 114. As a result, the portable device 130 is "unreachable" by the base station 114. In other words, the portable device 130 is unable to communicate with the base station 114 over the DECT air interface. For example, as shown in FIG. 1, the base station 114 may transmit a message 106 to the portable device 130 over the DECT air interface. However, because the portable device 130 is located beyond the effective range 101 of the base station 114, the message 106 does not reach the portable device 130. The portable device 130 also cannot acknowledge the message 106 that it does not receive. After failing to receive an ACK from the portable device 130 within a threshold duration following the transmission of the message 106, the base station 114 may attempt to retransmit the message 106 to the portable device 130.

Existing versions of the DECT ULE standard do not limit the number of retransmission attempts by a base station. However, as shown in FIG. 1, any attempts by the base station 114 to communicate with the portable device 130 may be futile as long as the portable device 130 is beyond the effective communication range 101 or otherwise unreachable by the base station 114. In other words, retransmitting the message 106 while the portable device 130 is unreachable may waste power, memory, and processing resources of the base station 114. Aspects of the present disclosure recognize that the base station 114 may allocate its resources more efficiently based on a reachability of each portable device in the network 100.

In some aspects, the base station 114 may determine that a portable device is unreachable after failing to receive an ACK from the device within a threshold period following the initial transmission of a message to the device. In some implementations, the threshold period may be associated with a threshold number (N) of retransmissions of the message. For example, the base station 114 may determine that the portable device 130 is unreachable after failing to receive an ACK from the portable device 130 following each of N retransmissions of the message 106. In some other implementations, the threshold period may represent with a threshold duration (T) of time. For example, the base station 114 may determine that the portable device 130 is unreachable after failing to receive an ACK from the portable device 130 at any time during the interval T following the initial transmission of the message 106.

In some aspects, the base station 114 may remove from its TX queue 116 any messages intended for unreachable devices and refrain from processing any further transmissions to unreachable devices. For example, upon determining that the portable device 130 is unreachable, the base station 114 may remove the message 106 (and any other messages intended for the portable device 130) from the TX queue 116 and refrain from processing any subsequent downlink messages that are received from the host processor 112 and intended for the portable device 130. This allows the base station 114 to conserve its power, memory, or processing resources or to reallocate such resources to serve other portable devices in the network 100 (such as the portable device 120). In some implementations, the base station 114 may store a list of unreachable devices indicating which (if any) portable devices in the network 100 are unreachable at any given time.

In some aspects, the base station 114 may detect that a portable device is reachable again after receiving an uplink message from the portable device. For example, the portable device 130 may be configured to periodically transmit a "keep alive" message to the base station 114. When the portable device 130 returns within the effective range 101 of the base station 114, the base station 114 may receive the keep alive message and determine that the portable device 130 is reachable again. In some implementations, the base station 114 may remove the portable device 130 from a list of unreachable devices upon determining that the portable device 130 is reachable again. Thereafter, the base station 114 may resume processing transmissions to the portable device 130.

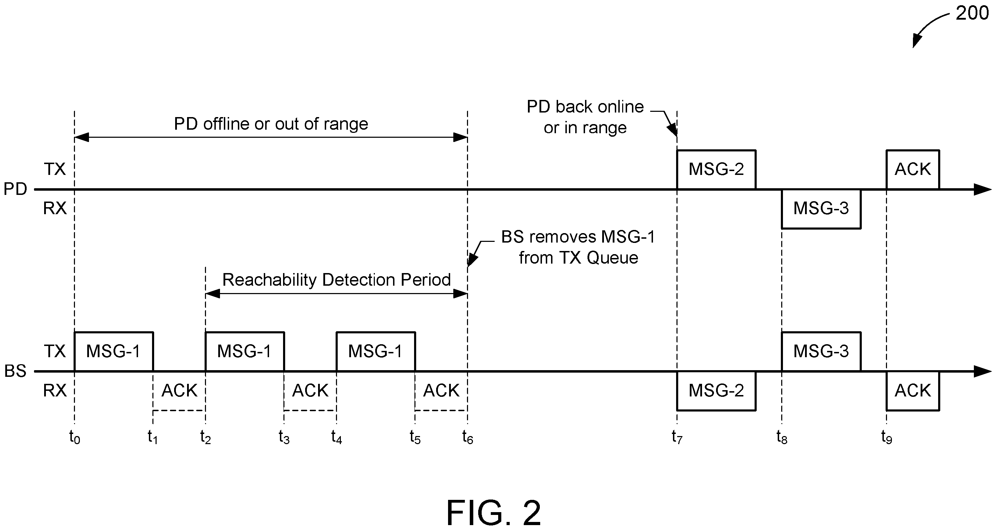

FIG. 2 shows a timing diagram 200 depicting example wireless communications between a base station (BS) and a portable device (PD) associated with a wireless communication network, according to some implementations. In some implementations, the wireless communication network may be one example of the network 100 of FIG. 1. More specifically, with reference to FIG. 1, the BS may be one example of the base station 114 and the PD may be one example of any of the portable devices 120 or 130.

In the example of FIG. 2, the PD is powered off ("offline") or is outside the effective communication range of the BS between times t₀ and t₆. At time t₀, the BS transmits (TX) a message (MSG-1) to the PD and listens for an ACK following the transmission of the message MSG-1. The PD fails to receive (RX) the message MSG-1 and therefore does not transmit (TX) an ACK back to the BS. In some implementations, after listening for a threshold duration without receiving (RX) an ACK, from times t₁ to t₂, the BS may perform a reachability detection operation to determine a reachability of the PD.

The BS may implement the reachability detection operation by performing up to a threshold number (N) of retransmissions of the message MSG-1 while listening for an ACK in response to each retransmission. If the BS receives an ACK in response to any retransmission of the message MSG-1, the BS may determine that the PD is still reachable and refrain from performing any further retransmissions of the message MSG-1. However, if the BS completes N retransmissions of the message MSG-1 and does not receive an ACK in response to any of the N retransmissions, the BS may determine that the PD is unreachable.

As shown in FIG. 2, the BS retransmits the message MSG-1, at time t₂, and listens for an ACK following the first retransmission of the message MSG-1. After failing to receive an ACK between times t₃ and t₄, the BS retransmits the message MSG-1, at time t₄, and listens for an ACK following the second retransmission of the message MSG-1. After failing to receive an ACK between times t₅ and t₆, the BS may determine, at time t₆, that the PD is unreachable. In some implementations, the BS may add the PD to a list of unreachable devices in response to determining that the PD is unreachable.

In the example of FIG. 2, the BS is shown to perform two retransmissions (N=2), between times t₂ and t₆ (referred to as a "reachability detection period"), before concluding that the PD is unreachable. However, in actual implementations, the reachability detection period may provide for any number of retransmissions (such as N<2 or N>2) before the BS must determine whether the PD is reachable. In some implementations, the reachability detection period may terminate after a predetermined (or fixed) number of retransmissions. In some other implementations, the reachability detection period may terminate after a predetermined (or fixed) duration of time.

In some implementations, the BS may remove the message MSG-1 from its TX queue (such as the TX queue 116 of FIG. 1) and refrain from retransmitting the message MSG-1 in response to determining that the PD is unreachable. The BS also may remove from its TX queue any other downlink messages intended for the PD in response to determining that the PD is unreachable. In some aspects, the BS may refrain from processing any new transmissions to the PD until it determines that the PD is reachable again. In some implementations, the BS may determine that the PD is reachable again after receiving an uplink message from the PD. For example, the uplink message may be any type of communication sent by the PD to the BS.

In the example of FIG. 2, the PD transmits a message (MSG-2) to the BS, at time t₇, after powering on ("online") or moving back within the effective communication range of the BS. In some implementations, the message MSG-2 may be a "keep alive" message that is periodically transmitted by the PD for purposes of maintaining communication with the BS. The BS receives the message MSG-2 and determines that the PD is reachable based on receiving the message MSG-2. In some implementations, the BS may remove the PD from a list of unreachable devices in response to determining that the PD is reachable again. Thereafter, the BS may resume processing transmissions to the PD.

As shown in FIG. 2, the BS transmits a message (MSG-3) to the PD, at time t₈, and listens for an ACK following the transmission of the message MSG-3. The PD receives the message MSG-3 and transmits an ACK message back to the PD, at time t₉, confirming receipt of the message MSG-3. Because the BS receives an ACK from the PD in response to the message MSG-3, the BS may confirm that the PD is still reachable and may continue processing subsequent transmissions to the PD.

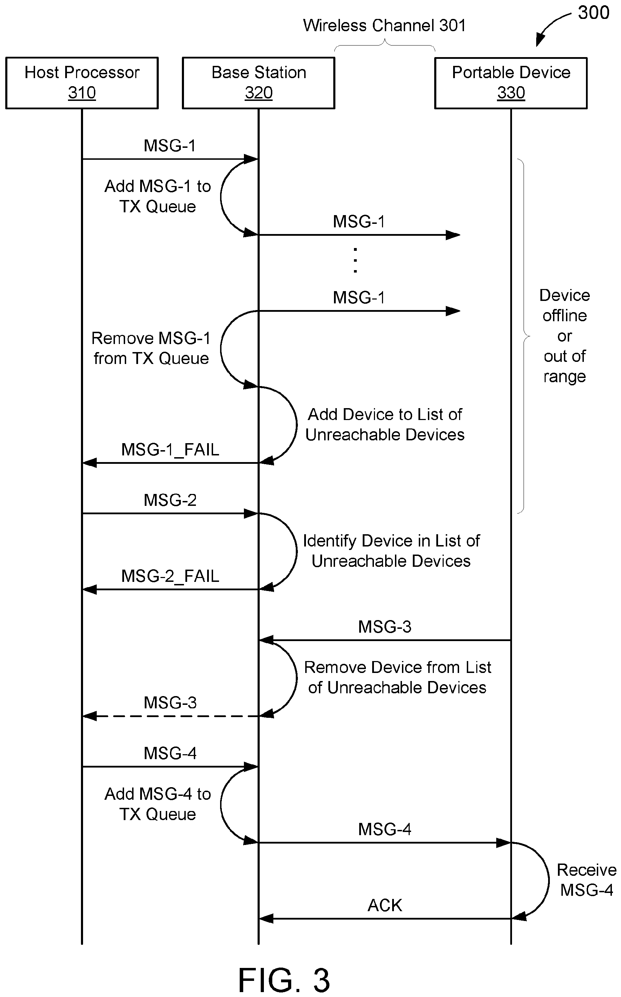

FIG. 3 shows a sequence diagram 300 depicting example communications between a host processor 310, a base station 320, and a portable device 330 associated with a wireless communication network, according to some implementations. In some implementations, the wireless communication network may be one example of the network 100 of FIG. 1. More specifically, with reference to FIG. 1, the host processor 310 may be one example of the host processor 112, the base station 320 may be one example of the base station 114, and the portable device 330 may be one example of any of the portable devices 120 or 130.

In the example of FIG. 3, the portable device 330 is initially offline or outside the effective communication range of the base station 320. While the portable device 330 is offline or out of range, the host processor 310 provides a message (MSG-1) to the base station 320 for transmission to the portable device 330. The base station 320 adds the message MSG-1 to its TX queue (such as the TX queue 116 of FIG. 1) and subsequently transmits the message MSG-1, over a wireless communication channel 301 (such as a DECT ULE air interface), to the portable device 330.

The portable device 330 fails to receive the message MSG-1 and therefore does not transmit an ACK back to the base station 320. After listening on the wireless channel 301 for a threshold duration without receiving an ACK from the portable device 330, the base station 320 performs a number (N) of retransmissions of the message MSG-1 over a reachability detection period (such as described with reference to FIG. 2). The base station 320 fails to receive an ACK in response to any of the N retransmissions and therefore determines that the portable device 330 is unreachable.

In response to determining that the portable device 330 is unreachable, the base station 320 removes the message MSG-1 from its TX queue and adds the portable device 330 to a list of unreachable devices. In some implementations, the base station 320 also may remove any other messages queued for transmission to the portable device 330. The base station 320 provides a notification to the host processor 310 indicating that the portable device 330 did not receive the message MSG-1 (MSG-1_FAIL). In some implementations, the notification MSG-1_FAIL may further indicate that the portable device 330 is unreachable.

The host processor 310 provides another message (MSG-2) to the base station 320 for transmission to the portable device 330. At this time, the base station 320 may determine that the portable device 330 is still unreachable based on the list of unreachable devices. Thus, without transmitting the message MSG-2 over the wireless channel 301 or adding the message MSG-2 to its TX queue, the base station 320 provides a notification to the host processor 310 indicating that the portable device 330 did not receive the message MSG-2 (MSG-2_FAIL). In some implementations, the notification MSG-2_FAIL may further indicate that the portable device 330 is unreachable.

After some time, the portable device 330 returns online or within the effective range of the base station 320 and transmits a message (MSG-3) to the base station 320 over the wireless channel 301. In some implementations, the message MSG-3 may be a "keep alive" message periodically transmitted by the portable device 330. The base station 320 receives the message MSG-3 and determines that the portable device 330 is reachable again based on receiving the message MSG-3. In some implementations, the base station 320 may forward the message MSG-3 to the host processor 310. The base station 320 removes the portable device 330 from the list of unreachable devices in response to determining that the device is reachable.

After the portable device 330 is back online or within range, the host processor 310 provides another message (MSG-4) to the base station 320 for transmission to the portable device 330. At this time, the base station 320 may determine that the portable device 330 is not unreachable based on the list of unreachable devices. Accordingly, the base station 320 adds the message MSG-4 to its TX queue and subsequently transmits the message MSG-4, over the wireless channel 301, to the portable device 330. The portable device 330 receives the message MSG-4 and transmits an ACK message, over the wireless channel 301, back to the base station 320 confirming receipt of the message MSG-4.

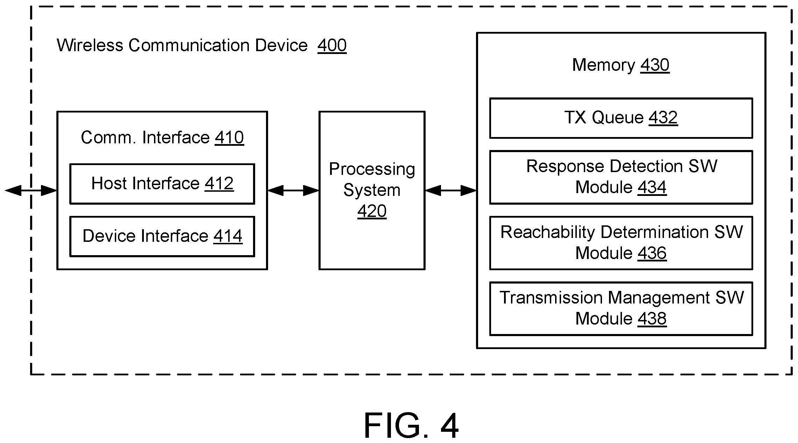

FIG. 4 shows a block diagram of an example wireless communication device 400, according to some implementations. In some implementations, the wireless communication device 400 may be one example of a base station associated with a HAN, such as the base station 114 of FIG. 1. With reference to FIG. 1, the base station may be configured to communicate with the host processor 112 and the portable devices 120 and 130.

The wireless communication device 400 includes a communication interface 410, a processing system 420, and a memory 430. The communication interface 410 is configured to communicate with a host processor and one or more portable devices associated with the HAN. More specifically, the communication interface 410 may include a host interface 412 to communicate with the host processor and a device interface 414 to communicate with the portable devices. In some implementations, the device interface 414 may transmit a message over a wireless channel to a particular portable device (also referred to as a "target device").

The memory 430 includes a transmission (TX) queue 432 to store or buffer messages for transmission over the wireless channel (such as the message intended for the target device). The memory 430 also may include a non-transitory computer-readable medium (including one or more nonvolatile memory elements, such as EPROM, EEPROM, Flash memory, or a hard drive, among other examples) that may store at least the following software (SW) modules:
- a response detection SW module 434 to listen for a response from the target device following the transmission of the message;
- a reachability determination SW module 436 to determine that the target device is unreachable based at least in part on listening for a threshold period without receiving the response from the target device; and
- a transmission management SW module 438 to refrain from retransmitting the message to the target device responsive to determining that the target device is unreachable.
Each software module includes instructions that, when executed by the processing system 420, causes the wireless communication device 400 to perform the corresponding functions.

The processing system 420 may include any suitable one or more processors capable of executing scripts or instructions of one or more software programs stored in the wireless communication device 400 (such as in the memory 430). For example, the processing system 420 may execute the response detection SW module 434 to listen for a response from the target device following the transmission of the message. The processing system 420 may execute the reachability determination SW module 436 to determine that the target device is unreachable based at least in part on listening for a threshold period without receiving the response from the target device. The processing system 420 may further execute the transmission management SW module 438 to refrain from retransmitting the message to the target device responsive to determining that the target device is unreachable.

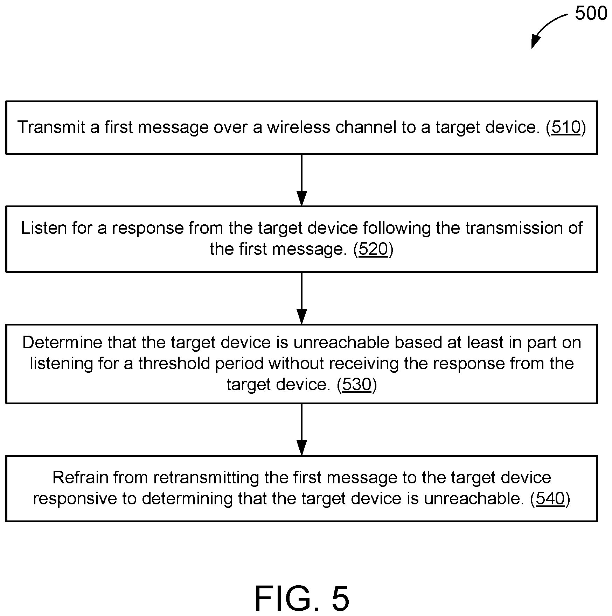

FIG. 5 shows an illustrative flowchart depicting an example operation 500 for wireless communications, according to some implementations. In some implementations, the example operation 500 may be performed by a wireless communication device such as the base station 114 of FIG. 1 or the wireless communication device 400 of FIG. 4.

The wireless communication device transmits a first message over a wireless channel to a target device (510). The wireless communication device listens for a response from the target device following the transmission of the first message (520). In some implementations, the response may be an acknowledgement (ACK) message indicating that the first message has been successfully received by the target device. The wireless communication device determines that the target device is unreachable based at least in part on listening for a threshold period without receiving the response from the target device (530). In some implementations, the determining that the target device is unreachable may include performing a number (N) of retransmissions of the first message over the threshold period. The wireless communication device further refrains from retransmitting the first message to the target device responsive to determining that the target device is unreachable (540).

In some aspects, the wireless communication device may further store the first message in a transmission queue prior to transmitting the first message to the target device and discard the first message from the transmission queue responsive to determining that the target device is unreachable. In some implementations, the wireless communication device may further receive the first message from a host processor and notify the host processor that the target device failed to receive the first message based on determining that the target device is unreachable. In some implementations, the notification to the host device may include an indication that the target device is unreachable.

In some aspects, the wireless communication device may further receive, from the host processor, a second message for transmission to the target device; and notify the host processor that the target device failed to receive the second message, without attempting to transmit the second message to the target device, based on determining that the target device is unreachable. In some implementations, the second message may never be added to the transmission queue.

In some aspects, the wireless communication device may further receive a second message over the wireless channel from the target device after determining that the target device is unreachable and determine that the target device is reachable responsive to receiving the second message. In some implementations, the wireless communication device may further receive, from the host processor, a third message for transmission to the target device; and transmit the third message to the target device based on determining that the target device is reachable.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. A method for wireless communication performed by a wireless communication device, comprising:
transmitting a first message over a wireless channel to a target device;
listening for a response from the target device following the transmission of the first message;
determining that the target device is unreachable based at least in part on listening for a threshold period without receiving the response from the target device; and
refraining from retransmitting the first message to the target device responsive to determining that the target device is unreachable.

2. The method of claim 1, wherein the response comprises an acknowledgement (ACK) message indicating that the first message has been successfully received by the target device.

3. The method of claim 1, wherein the determining that the target device is unreachable comprises:
performing a number (N) of retransmissions of the first message over the threshold period.

4. The method of claim 1, further comprising:
storing the first message in a transmission queue prior to transmitting the first message to the target device; and
discarding the first message from the transmission queue responsive to determining that the target device is unreachable.

5. The method of claim 4, further comprising:
receiving the first message from a host processor; and
notifying the host processor that the target device failed to receive the first message based on determining that the target device is unreachable.

6. The method of claim 5, wherein the notification to the host processor includes an indication that the target device is unreachable.

7. The method of claim 5, further comprising:
receiving, from the host processor, a second message for transmission to the target device; and
notifying the host processor that the target device failed to receive the second message, without attempting to transmit the second message to the target device, based on determining that the target device is unreachable;
wherein, optionally, the second message is never added to the transmission queue.

8. The method of claim 1, further comprising:
receiving a second message over the wireless channel from the target device after determining that the target device is unreachable; and
determining that the target device is reachable responsive to receiving the second message;
the method optionally further comprising:
receiving, from a host processor, a third message for transmission to the target device; and
transmitting the third message to the target device based on determining that the target device is reachable.

9. A wireless communication device comprising:
a processing system; and
a memory storing instructions that, when executed by the processing system, causes the wireless communication device to:
transmit a first message over a wireless channel to a target device;
listen for a response from the target device following the transmission of the first message;
determine that the target device is unreachable based at least in part on listening for a threshold period without receiving the response from the target device; and
refrain from retransmitting the first message to the target device responsive to determining that the target device is unreachable.

10. The wireless communication device of claim 9, wherein the response comprises an acknowledgement (ACK) message indicating that the first message has been successfully received by the target device; or
wherein the determining that the target device is unreachable comprises performing a number (N) of retransmissions of the first message over the threshold period.

11. The wireless communication device of claim 9, wherein execution of the instructions further causes the wireless communication device to:
store the first message in a transmission queue prior to transmitting the first message to the target device; and
discard the first message from the transmission queue responsive to determining that the target device is unreachable.

12. The wireless communication device of claim 11, wherein execution of the instructions further causes the wireless communication device to:
receive the first message from a host processor; and
notify the host processor that the target device failed to receive the first message based on determining that the target device is unreachable.

13. The wireless communication device of claim 12, wherein the notification to the host processor includes an indication that the target device is unreachable.

14. The wireless communication device of claim 12, wherein execution of the instructions further causes the wireless communication device to:
receive, from the host processor, a second message for transmission to the target device; and
notify the host processor that the target device failed to receive the second message, without attempting to transmit the second message to the target device, based on determining that the target device is unreachable;
wherein, optionally, the second message is never added to the transmission queue.

15. The wireless communication device of claim 9, wherein execution of the instructions further causes the wireless communication device to:
receive a second message over the wireless channel from the target device after determining that the target device is unreachable; and
determine that the target device is reachable responsive to receiving the second message;
wherein, optionally, execution of the instructions further causes the wireless communication device to:
receive, from a host processor, a third message for transmission to the target device; and
transmit the third message to the target device based on determining that the target device is reachable.
